# EUROPEAN PATENT SPECIFICATION

(11) **EP 2 030 499 B1**
(45) Date of publication and mention of the grant of the patent: **07.12.2011**
(21) Application number: 08167728.8
(22) Date of filing: 28.10.2008
(51) Int. Cl.: A01D 78/04

(54) **Towed swather**
Gezogener Schwadmäher
Andaineur remorqué

(30) Priority: 28.08.2007 FI 20070649
(43) Date of publication of application: 04.03.2009
(73) Proprietor: Oy El-Ho Ab, 68910 Bennäs (FI)
(72) Inventor: Forsén, Peter, 68910, Bennäs (FI); Westerback, Per, 68910, Bennäs (FI); Häggblom, Karl-Erik, 68910, Bennäs (FI)
(74) Representative: Niemi, Hakan Henrik

(56) References cited:
- EP-A- 0 559 024
- EP-A- 0 937 382
- EP-A- 1 618 778
- EP-A- 1 668 977
- EP-A- 1 852 010
- FR-A- 2 819 374
- US-A- 4 723 401

## Description

The present invention relates to a towed swather used in farming for harvesting crop, such as grass, hay or straw, the swather having a large working width and comprising at least two work units mounted individually on a carrier frame provided with wheels, wherein each individual work unit is movably fastened to the centrally positioned carrier frame with at least one vertical articulated shaft and wherein the work units are arranged to gather material to a swath between support wheels of the frame and wherein the work units are further provided with a steering device for improving the capability of the work units to follow the driving line of the tractor either centrally or with an adjustable offset relative to it.

In phase with increasing requirements for higher capacity in the harvesting of agricultural crop within farming, a large number of different implementations of swathers with a large working width have been provided recently. Many of these are swathers whose work unit is formed of rotors with vertical shafts. An example of such a swather is disclosed in, for example, EP 1 668 977 (Lely Enterprises AG), EP 1 618 778 (Claas Salgau GmbH), EP_0_937_3828 (Niemeyer Landmaschienen GmbH) and US 4 723 401 (New Holland Inc.). There are numerous variations of this type of towed swathers on the market, and what is common to them is that they are indeed to be driven between two parallel swaths placeing the new swath between the wheels of the carrier frame, i.e. in the centre of the driving line of the tractor.
Another type of swather with horizontal rotors is disclosed by Finnish patent application FI 20070375 (Oy El-ho Ab). In this one, too, the swath is placed in the centre of the driving line of the tractor.

Wide spreading of the crop after cutting in order to accelerate the wilting process is traditionally the absolutely most common way in Central and Southern Europe. Thus, in these areas, there has been no need to provide a swather where the tractor is not driven on the material. In Scandinavia, by contrast, it is preferred to mow with a mower conditioner, which leaves the cut grass in airy swaths upon the stubble.

The risk of dirtying is, nevertheless, great even then if it is necessary to drive on the material in the swaths during harvesting. Hereby, it is not only the material tramped down by the tractor wheels that gets contaminated, but also the fact that the pick-up pins in the following harvester must be set much lower to be able to pick up the material not longer lying loosely on the stubble is at least of equally great significance with respect to dirtying. Moist soil and wet grass as well as organic soil types are common in grassland areas particularly in the Nordic countries, and this naturally increases the risk of dirtying.

The risk of dirtying and the degree of dirtying of the grass has, during the past few years, ironically increased in areas with intensive grassland cultivation and cattle keeping where the farmers, controlled by the environmental regulations of the EU, are often forced to spread fertilizer directly onto the growing grasslands. This is because in practice there is not enough area which is ploughed.

That is why there is a great risk that the grass silage gets dirty because of residue particles and microbes from the fertilizer that has been spread onto the field only a few weeks before harvesting.

For example the nitrate directive of the EU has led to spreading right trading between farmers, which is one thing that leads to a multiple health hazard, because the silage is subjected to a risk of contamination, not only from manure and microbes that are already "familiar" to the cattle (that the cattle are already used to) from their own stable but also because of manure and microbes from other sources, such as pig farms and horse stables, that are spread on growing grasslands.

The several wide-spread epidemics within animal farming in Europe in recent years shows the extremely great importance of good fodder hygiene.

The usual proceedings in connection with silage harvesting where the grass is cut in swaths with the mower conditioner and the swath is picked up with a precision chopper or a round bale press, generally used in Scandinavia, is highly advantageous with respect to the hygiene aspect. The grass is neither tramped down on the ground nor is it pushed along the ground in connection with separate swathing.

To improve the drying of these grass swaths, ELHO has developed a rotary tedder with a rigid horizontal rotor (presented in the ELHO Master brochure). With this device, the tractor is driven astride over the swath, so that the material is not tramped down by the tyres. The transverse rotor lifts up and turns the grass in the swath without pushing it along the ground. The fodder remains clean, and it is not a coincidence that Finland, having a very large number of ELHO rotary tedders in use, has the purest milk in Europe.

ELHO has also developed a corresponding horizontal rotary tedder with a side conveyor at the back to bring the swaths together (see SideFlow model in the above ELHO Master brochure). Here, too, the tractor is driven astride over the swaths, and the fodder remains clean. The disadvantage is, however, that when bringing together two swaths, one of the swaths on the underside remains untouched and wet.

If, by contrast, a conventional rotor swather of the type disclosed in the above-mentioned patents EP 1 618 778, EP 0_937_3828 and FI 20070375 is used for bringing together two mower conditioner swaths to increase the harvesting capacity, it is necessary to drive the tractor on the swaths because these swathers place the new double swath directly after the centre line of the tractor.

To alleviate the disadvantages of the above-described and other known solutions, a more advanced model of the swather of FI 20070375 has been provided where at least two swaths with minimum ground contact can be turned and brought together into a double swath which is placed on the dried-up ground between the swaths of the mower conditioner at an offset preset in the field relative to the tractor's centre line.

The main advantage of the invention is as follows:
- The risk of the fodder getting contaminated because of manure residues and ground microbes is minimized because the tractor can be driven astride over the swath of the mower conditioner, so that its tyres do not tramp down the fodder.
- Drying of the swaths is quicker and more uniform when the swaths are turned upside down on the dried ground between the swaths of the mower conditioner.
- The risk of stones getting to the swath and causing damages for the expensive harvesters is reduced because the rake teeth of the inclined rotor can work with a greater ground clearance, as they do not have to lift up the material having been tramped down by the tractor tyres.

To achieve this, the invention is characterized by what is defined by the attached claims.

In the following, the invention is described with reference to the following principled drawings:
Figure 1 shows a top view of the swather working in the offset operating position as well as swaths of the mower conditioner and the formed double swath;
Figure 2 shows schematically the steering mechanism enabling the work of the swather in the offset position;
Figure 3 shows schematically a control mechanism defining the operating angles α and β for the inclined rotors of the swather.
Figure 4 shows a principled sketch of the machine hydraulics.

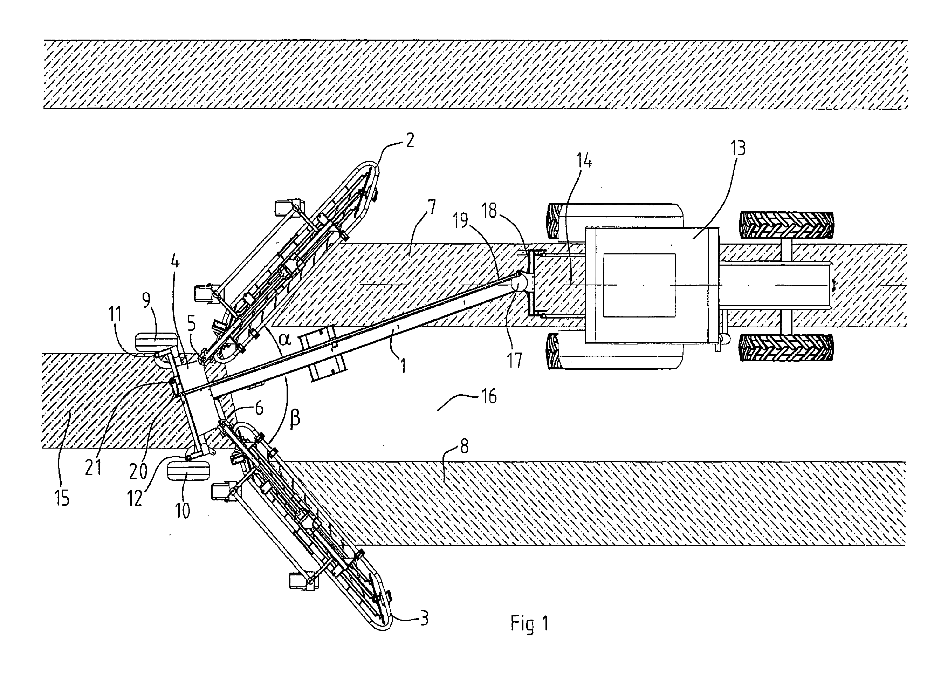

The swather in Figure 1 is formed of a carrier frame connected to lower link arms 37 of the tractor 13 and provided with two work units, which are formed as what are called inclined rotor units 2 and 3 (also called basket rake). The inclined rotor units 2 and 3 are turnably fastened to the rear part 4 of the carrier frame 1 by means of vertical pivot shafts 5 and 6, so that their angle α and β, respectively, can be adjusted with regard to the longitudinal axis of the carrier frame to optimize the operating angle of the inclined rotor units with regard to the material in the original swaths 7 and 8 of the mower conditioner.

The carrier frame is, at the back, provided with large support wheels 9 and 10. The support wheels can be turned around the vertical pivot shafts 11 and 12 to steer the rear part 4 of the carrier frame with respect to the centre line 14 of the tractor 13 to be able to place the new double swath 15 on the dried ground area 16 between the swaths 7 and 8 of the mower conditioner.

Turnably fastened around the vertical shaft 17 in the front part of the carrier frame 1, there is a steering and connecting unit 18, which is through the connection to the lower link arms 37 of the tractor continuously kept perpendicularly to the centre line 14 of the tractor. The long steering rod 19 connects the steering and connecting unit 18 to the link arm unit 20 around the vertical shaft 21 turnably fastened to the rear part 4 of the carrier frame.

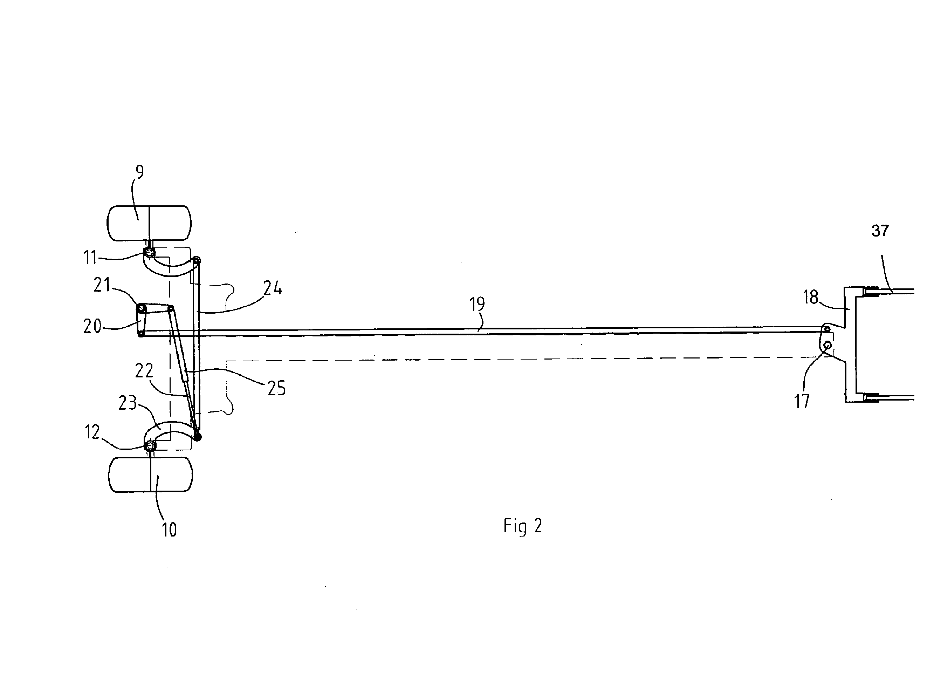

Figure 2 shows schematically the steering mechanism enabling the swather to operate in the offset position. The lower link arms 37 of the tractor are connected to the steering and connecting unit 18, which turns with the tractor around the vertical shaft 17. The steering rod 19 transmits the steering movement to the link arm unit 20, which turns around the vertical shaft 21. The second arm in the link arm unit is fastened in an articulated manner to the crossbar 22, the second end of which is likewise fastened in a pivotable manner to the steering arm 23 of the support wheels, which is turnable around the vertical pivot shaft 12 of the support wheel 10 but has a fixed angle relative to the support wheel. The wheels 9 and 10 are, in an ordinary manner, connected to each other with a track rod 24.

The length of the crossbar 22 can be adjusted for offset mode with a telescopic unit, here shown as a hydraulic cylinder 25.

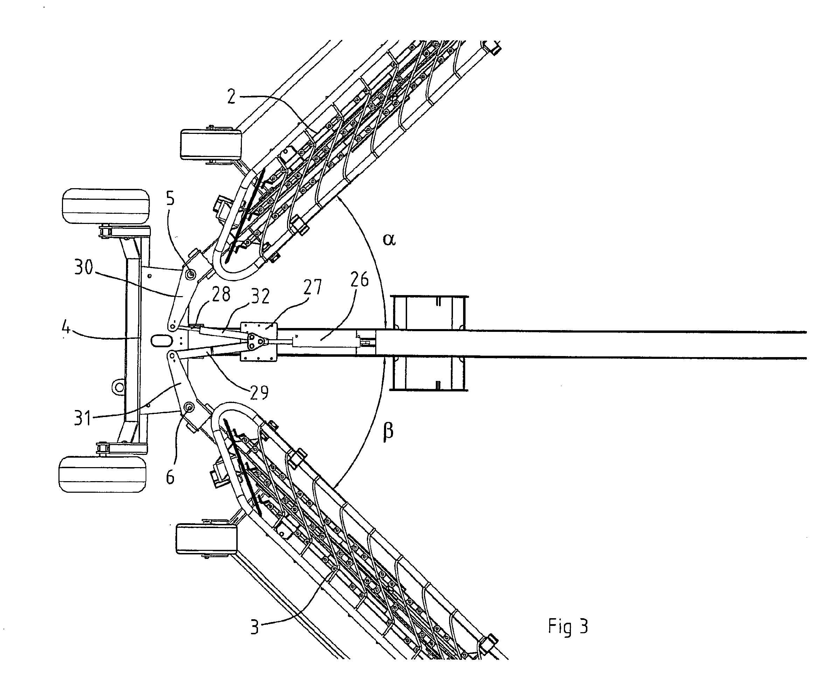

Figure 3 shows schematically the control mechanism which sets the operating angles α and β for the inclined rotor units 2 and 3 of the swather. One end of the hydraulic cylinder 26 is fixed to the carrier frame 1 and the other end to a sledge 27 displaceable lengthwise on the frame. From this, there extends backwards two link arms 28, 29 to positioning arms 30, 31 of the inclined rotor units. These are, as described earlier, fastened to the rear part 4 of the carrier frame turnably around the vertical shafts 5 and 6. The length of the link arm 28 can be adjusted with a telescopic unit, here shown as a hydraulic cylinder 32.

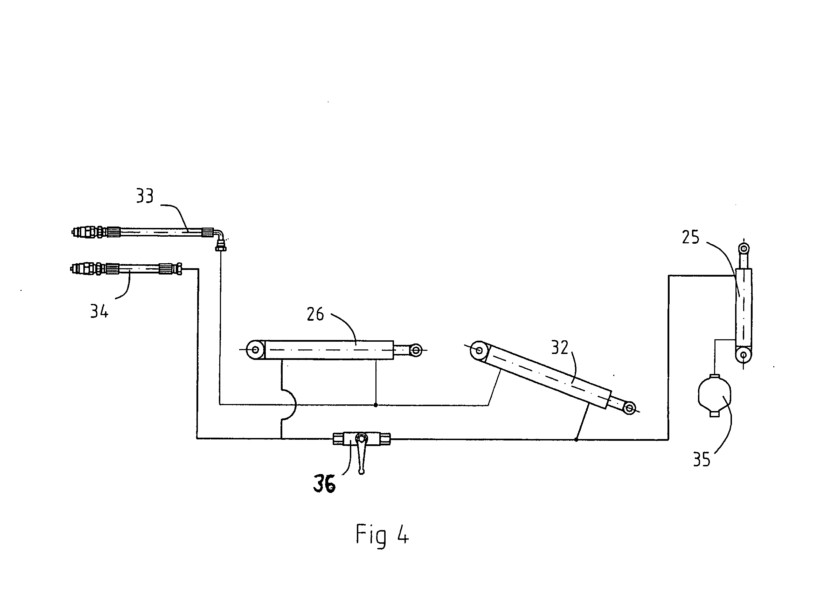

Figure 4 shows a principled sketch of the hydraulics of the swather, where hydraulic hoses 33, 34 are connected to the external double-acting hydraulic connections (not shown) of the tractor. Further, cylinder 26 and telescopic unit 32 are shown, intended for adjustment of the operating angles α and β of the inclined rotor units 2 and 3, as well as the telescopic unit 25 for length adjustment of the crossbar 22. A partially gas-filled hydraulic accumulator 35 is connected to the other outlet of the telescopic unit 25. Further, a closing valve 36 for the offset adjustment is shown.

The swather according to the invention operates as follows.

In the operating position where the swath positioning is, as conventionally, directly after the centre line of the tractor 13, the lower link arms 37 of the tractor keep the steering and connecting unit 18 perpendicularly to the centre line of the tractor 14. In a conventional way, the support wheels 9 and 10 are then steered in such a way that they follow the wheel track of the tractor.

In this form of operation, the operating angles α and β of the inclined rotor units 2 and 3 are equally large, and when the closing valve 36 is closed, the angle adjustment functions in a conventional manner, as described in more detail in FI 20070375.

For adjustment for work with offset swath positioning, the closing valve 36 is opened first. Oil is supplied under pressure from the external hydraulic connections of the tractor through the hydraulic hose 33 to the piston rod side on the cylinder 26. The cylinder is pulled in, and the inclined rotor units 2 and 3 are turned to the operating position through the sledge 27. Since the oil is also simultaneously supplied to the piston side on the telescopic unit 32, the link arm 28 extends and reduces the folding angle for the inclined rotor unit 2, and thus α < β, so that both rotor units assume also in the offset position principally the same operating angle with regard to the material. At the same time as the closing valve 36 was opened, the oil could be conveyed from the piston rod side of the telescopic unit 25 back to the tractor via the hydraulic hose 34. The pressure in the hydraulic accumulator 35 opens then the telescopic unit 25, so that the crossbar 22 extends. The support wheels 9 and 10 assume then, through the steering mechanism shown in Figure 2, a new reference angle with regard to the steering and connecting unit 18, and the rear part 4 of the swather assumes, in driving forwards, an offset position with regard to the centre line 14 of the tractor. The new double swath 15 can now be positioned on the dried ground area 16, which was previously between the swaths of the mower conditioner.

After the desired offset position has been achieved, the closing valve 36 is closed. The oil on the piston rod side in the telescopic units 32 and 25 is now locked up, and the telescopic units are in practice riding during the swathing work. In contrast, the cylinder 26, which regulates the working width of the swather, can still be driven out and in by means of the hydraulic hoses 33, 34 connected to the outer hydraulic connections of the tractor. This is a great advantage, particularly in working on a wedge-shaped field.

Closing valve 36 being closed, the original steering mechanism steering the rear part 4 of the swather in relation to the driving line of the tractor remains intact also in the offset position, at least to a given extent. In sharp turns to the left (in the implementation according to the description), it may occur that a maximum turning angle is achieved for the support wheels of the machine. To prevent the steering mechanism from being broken down in the driving, the crossbar 22 can hereby be compressed such that oil from the cylinder 25 is conveyed back to the hydraulic accumulator 35. When the turning angle of the tractor is reduced again, the steering mechanism functions in the usual way and maintains continuous offset.

When it is desirable to stop offset driving and return to driving in the middle behind the tractor, the closing valve 36 is opened first. After that, oil is conveyed via the hydraulic hose 34 to the piston rod side of the telescopic units 25 and 32, so that the telescopic units are drawn in completely. The link arm 28 assumes now its minimum length, which is identical with the length of the link arm 29. This means that the operating angles α and β become identical. Likewise, the crossbar 22 assumes its minimum length, and the swather is steered in the middle behind the tractor.

The greatest advantage of the swather according to the invention is that it enables swathing with an offset swath positioning relative to the centre line of the tractor, which minimizes the contamination of the grass when making wilted grass silage while also improving uniform drying of the material. This is because the operating principle of the inclined rotors is to throw the material obliquely inwards and, at the same time, to turn both swaths 7 and 8 mainly upside down, so that their wet underside becomes mainly the upper part of the new swath 15 without the material is pushed along the ground. Uniform drying is further improved while the new double swath being positioned where the ground has dried up between the original mower conditioner swaths 7 and 8.

Further, the capacity of the following harvester is increased because the harvester can gather material from larger swaths. Hereby, energy is also saved because the required driving distance on the field with a heavy harvester is twice as short per ton of gathered fodder. Also the risk of expensive harvester breakdowns caused by stones in the swath is reduced because the swathing can take place with higher adjustment of the teeth of the inclined rotors which throw the material to the middle.

The invention is naturally not confined to the above preferred embodiments but a large number of variations are feasible within the scope of the attached claims. Thus, the swather may be, for example, provided with work units of a type different from the inclined rotor units shown here. Further, the adjustment of the offset position does not have to be carried out with hydraulic cylinders but may be carried out by other mechanical or electric adjusting devices.

## Claims

1. A swather pulled by a tractor (13) used in farming for harvesting crop, such as grass, hay or straw, the swather having a large working width and comprising
at least two work units (2, 3) mounted individually on a carrier frame (1) provided with support wheels (9, 10), wherein
each individual work unit is movably fastened to the centrally positioned carrier frame (1) with at least one vertical articulated shaft (5, 6)
and wherein the work units are arranged to gather material to a swath (15) between support wheels (9, 10) of the frame, and
the support wheels (9, 10) are provided with a steering mechanism, **characterized in that**
the support wheels (9, 10) are arranged by the steering mechanism to assume a new reference angle such that the rear part (4) of the swather has assumed, when pulled forward, an offset position with regard to the centre line (14) of the tractor (13), such that
when swathing in this offset swath positioning to turn two mower conditioner swaths (7, 8) mainly upside down into a new double swath (15),
the tractor can be driven astride over a swath (7, 8) of the mower conditioner, while
the new double swath (15) is arranged to be positioned with a sideways displacement relative to the centre line (14) of the tractor on the dried ground area (16) having been between the swaths (7, 8) of the mower conditioner.

2. A swather according to claim 1, **characterized in that** the steering mechanism comprises a steering and connecting unit (18),
the steering movement of which is transmitted by a steering rod (19), a link arm unit (20) and a crossbar (22) to a steering arm (23) of the support wheels (9, 10), such that
the angle between the steering and connecting unit (18) and the steering arm of the support wheels is adjustable while pulling the swather forward,
thus administering the offset by which the rear part (4) of the swather follows the centre line (14) of the tractor (13).

3. A swather according to claims 1 to 2, **characterized in that** the work units (2, 3) are formed of inclined rotor units rotating around horizontal axes.

4. A swather according to claim 3, **characterized in that** the angles (α and β) of the work units (2, 3) relative to the carrier frame (1) can be defined in the sideways displaced operating position to be different for the left (2) and the right (3) work unit, so that the angle of the work units relative to the driving direction and the material to be gathered is hereby optimized.

5. A swather according to claim 3, **characterized in that** the angle (α, β) of at least one of the work units (2, 3) relative to the carrier frame (1) in the adjustment to the sideways displaced operating position is automatically compensated relative to the extent of the sideways displacement.

6. A swather according to any preceding claim, **characterized in that** the steering mechanism of the support wheels (9, 10) is in the sideways displaced operating position provided with a device enabling the tractor to turn more sharply than the maximum steering angle for the support wheels (9, 10) would allow.

7. A swather according to claim 6, **characterized in that** this device is formed of a flexible telescopic unit (25) connected to the crossbar (22) of the steering mechanism.

8. A swather according to claim 6, **characterized in that** the telescopic unit (25) comprises a hydraulic cylinder connected to the crossbar (22) of the steering mechanism and having a hydraulic accumulator (35) connected thereto.

9. A swather according to any preceding claim, **characterized in that** same hydraulic hoses (33, 34) connected to the tractor (13) are used for adjusting the working width of the swather and for setting the swather in the sideways displaced operating position.

## Patentansprüche

1. Schwadmäher, der von einem Traktor (13) gezogen wird und in der Landwirtschaft zum Ernten von Futter, wie beispielsweise Gras, Heu oder Stroh, eingesetzt wird, wobei der Schwadmäher eine große Arbeitsbreite hat und umfasst:
wenigstens zwei Arbeitseinheiten (2, 3), die einzeln an einem Trägerrahmen (1) angebracht sind, der mit Stützrädern (9, 10) versehen ist, wobei
jede einzelne Arbeitseinheit mit wenigstens einer vertikalen Gelenkwelle (5, 6) beweglich an dem mittig positionierten Trägerrahmen (1) befestigt ist,
und die Arbeitseinheiten so eingerichtet sind, dass sie Material zu einer Schwade (15) zwischen Stützrädern (9, 10) des Rahmens zusammentragen, und
die Stützräder (9, 10) mit einem Lenkmechanismus versehen sind,
**dadurch gekennzeichnet, dass**
Stützräder (9, 10) durch den Lenkmechanismus so angeordnet werden, dass sie einen neuen Bezugswinkel einnehmen, so dass der hintere Teil (4) des Schwadmähers, wenn er vorwärts gezogen wird, eine versetzte Position in Bezug auf die Mittellinie (14) des Traktors (13) einnimmt, so dass
wenn in dieser versetzten Schwadposition Schwadmähen durchgeführt wird, zwei Mähwender-Schwaden (7, 8) hauptsächlich zu einer neuen Doppelschwade (15) gewendet werden,
der Traktor über einer Schwade (7, 8) des Mähwenders fahren kann, wobei
die neue Doppelschwade (15) so eingerichtet ist, dass sie mit einer seitlichen Versetzung relativ zu der Mittellinie (14) des Traktors auf dem getrockneten Bodenbereich (16) positioniert wird, der sich zwischen den Schwaden (17, 18) des Mähwenders befunden hat.

2. Schwadmäher nach Anspruch 1, **dadurch gekennzeichnet, dass**
der Lenkmechanismus eine Lenk-und-Verbindungs-Einheit (18) umfasst,
deren Längsbewegung durch eine Lenkstange (19), eine Verbindungsarm-Einheit (20) und eine Querstange (22) auf eine Lenkstange (23) der Stützräder (9, 10) übertragen wird, so dass
der Winkel zwischen der Lenk-und-Verbindungs-Einheit (18) und der Lenkstange der Stützräder verstellt werden kann, während der Schwadmäher vorwärts gezogen wird,
und so der Versatz gesteuert wird, mit dem der hintere Teil des Schwadmähers der Mittellinie (14) des Traktors (13) folgt.

3. Schwadmäher nach den Ansprüchen 1 bis 2, **dadurch gekennzeichnet, dass** die Arbeitseinheiten (2, 3) aus geneigten Rotoreinheiten bestehen, die sich um horizontale Achsen herum drehen.

4. Schwadmäher nach Anspruch 3, **dadurch gekennzeichnet, dass** die Winkel (α und β) der Arbeitseinheiten (2, 3) relativ zu dem Trägerrahmen (1) in der seitlich verschobenen Arbeitsposition so definiert werden können, dass sie für die linke Arbeitseinheit (2) und die rechte Arbeitseinheit (3) verschieden sind, so dass der Winkel der Arbeitseinheiten relativ zu der Fahrrichtung und dem zusammenzutragenden Material **dadurch** optimiert wird.

5. Schwadmäher nach Anspruch 3, **dadurch gekennzeichnet, dass** der Winkel (α, β) wenigstens einer der Arbeitseinheiten (2, 3) relativ zu dem Trägerrahmen (1) bei der Verstellung der seitlich verschobenen Arbeitsposition automatisch relativ zu dem Maß der seitlichen Verschiebung kompensiert wird.

6. Schwadmäher nach einem der vorangehenden Ansprüche, **dadurch gekennzeichnet, dass** der Lenkmechanismus der Stützräder (9, 10) in der seitlich verschobenen Arbeitsposition mit einer Vorrichtung versehen ist, die den Traktor befähigt, in spitzerem Winkel zu wenden als der maximale Lenkwinkel für die Stützräder (9, 10) zulassen würde.

7. Schwadmäher nach Anspruch 6, **dadurch gekennzeichnet, dass** die Vorrichtung aus einer flexiblen Teleskopeinheit (25) besteht, die mit der Querstange (22) des Lenkmechanismus verbunden ist.

8. Schwadmäher nach Anspruch 6, **dadurch gekennzeichnet, dass** die Teleskopeinheit (25) einen Hydraulikzylinder umfasst, der mit der Querstange (22) des Lenkmechanismus verbunden ist und mit dem ein Druckspeicher (35) verbunden ist.

9. Schwadmäher nach einem der vorangehenden Ansprüche, **dadurch gekennzeichnet, dass** gleiche Hydraulikschläuche (33, 34), die mit dem Traktor (13) verbunden sind, eingesetzt werden, um die Arbeitsbreite des Schwadmähers zu verstellen und den Schwadmäher in die seitlich versetzte Arbeitsposition zu bringen.

## Revendications

1. Andaineur tiré par un tracteur (13) utilisé dans l'agriculture pour moissonner des cultures telles que l'herbe, le foin ou la paille, l'andaineur ayant une grande largeur de travail et comprenant :
au moins deux unités de travail (2, 3) montées individuellement sur un châssis porteur (1) prévu avec des roues de support (9, 10), dans lequel :
chaque unité de travail individuelle est fixée de manière mobile au châssis porteur (1) positionné de manière centrale, avec au moins un arbre articulé vertical (5, 6),
et dans lequel les unités de travail sont agencées pour collecter la matière en un andain (15) entre des roues de support (9, 10) du châssis, et
les roues de support (9, 10) sont dotées d'un mécanisme de direction, **caractérisé en ce que** :
les roues de support (9, 10) sont agencées par le mécanisme de direction afin de prendre un nouvel angle de référence de sorte que la partie arrière (4) de l'andaineur a pris, lorsqu'il est tiré vers l'avant, une position décalée par rapport à la ligne centrale (14) du tracteur (13), de sorte que :
lors de la mise en andain, dans ce positionnement d'andain décalé, pour retourner deux andains de faucheuse-conditionneuse (7, 8) principalement en un nouveau double andain (15),
le tracteur peut être entraîné à califourchon sur un andain (7, 8) de la faucheuse-conditionneuse, alors que :
le nouveau double andain (15) est agencé pour être positionné avec un déplacement oblique par rapport à la ligne centrale (14) du tracteur sur la surface de sol séchée (16) qui a été entre les andains (7, 8) de la faucheuse-conditionneuse.

2. Andaineur selon la revendication 1, **caractérisé en ce que** :
le mécanisme de direction comprend une unité de direction et de raccordement (18),
dont le mouvement est transmis par une tige de direction (19), une unité de bras de liaison (20) et une traverse (22) à un bras de direction (23) des roues de support (9, 10), de sorte que :
l'angle entre l'unité de direction et de raccordement (18) et le bras de direction des roues de support est ajustable tout en tirant l'andaineur vers l'avant,
gérant ainsi le décalage grâce auquel la partie arrière (4) de l'andaineur suit la ligne centrale (14) du tracteur (13).

3. Andaineur selon les revendications 1 à 2, **caractérisé en ce que** les unités de travail (2, 3) sont formées avec des unités de rotor inclinées tournant autour d'axes horizontaux.

4. Andaineur selon la revendication 3, **caractérisé en ce que** les angles (α et β) des unités de travail (2, 3) par rapport au châssis porteur (1) peuvent être définis dans la position de fonctionnement obliquement déplacée pour être différents pour l'unité de travail gauche (2) et l'unité de travail droite (3), de sorte que l'angle des unités de travail par rapport à la direction d'entraînement et à la matière à collecter, est ainsi optimisé.

5. Andaineur selon la revendication 3, **caractérisé en ce que** l'angle (α, β) d'au moins l'une des unités de travail (2, 3) par rapport au châssis porteur (1) lors de l'ajustement dans la position de travail obliquement déplacée, est automatiquement compensé par rapport à l'étendue du déplacement oblique.

6. Andaineur selon l'une quelconque des revendications précédentes, **caractérisé en ce que** le mécanisme de direction des roues de support (9, 10) est dans la position de fonctionnement obliquement déplacée prévue avec un dispositif permettant au tracteur de tourner selon un angle plus net que l'angle de direction maximum pour les roues de support (9, 10) ne l'aurait permis.

7. Andaineur selon la revendication 6, **caractérisé en ce que** ce dispositif est formé d'une unité télescopique flexible (25) raccordée à la traverse (22) du mécanisme de direction.

8. Andaineur selon la revendication 6, **caractérisé en ce que** l'unité télescopique (25) comprend un vérin hydraulique raccordé à la traverse (22) du mécanisme de direction et ayant un accumulateur hydraulique (35) raccordé à ce dernier.

9. Andaineur selon l'une quelconque des revendications précédentes, **caractérisé en ce que** l'on utilise les mêmes tuyaux flexibles hydrauliques (33, 34) raccordés au tracteur (13) pour ajuster la largeur de travail de l'andaineur et pour régler l'andaineur dans la position de fonctionnement obliquement déplacée.
